(19) Europäisches Patentamt
European Patent Office
Office européen des brevets

(11) **EP 2 275 911 B1**

(12) **EUROPEAN PATENT SPECIFICATION**

(45) Date of publication and mention of the grant of the patent:
**14.12.2016 Bulletin 2016/50**

(51) Int Cl.:
***G06F 3/045*** *(2006.01)* ***G06F 3/0488*** *(2013.01)*
***G06F 3/041*** *(2006.01)*

(21) Application number: **10168941.2**

(22) Date of filing: **08.07.2010**

(54) **Touch panel and multi-touch detecting method thereof**

Berührempfindlicher Tastschirm für Mehrfachberührungsdetektion.

Écran tactile et procédé de détection multitouches associé

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **10.07.2009 CN 200910304246**

(43) Date of publication of application:
**19.01.2011 Bulletin 2011/03**

(73) Proprietor: **InnoLux Corporation**
**Chu-Nan 350, Taipei (TW)**

(72) Inventors:
- **Chen, Po-Yang**
  **350, Chu-Nan (TW)**
- **Shih, Po-Sheng**
  **350, Chu-Nan (TW)**
- **Chao, Chih-Han**
  **350, Chu-Nan (TW)**
- **Cheng, Chien-Yung**
  **350, Chu-Nan (TW)**

(74) Representative: **Jones, Keith William et al**
**Murgitroyd & Company**
**Scotland House**
**165-169 Scotland Street**
**Glasgow G5 8PL (GB)**

(56) References cited:
**EP-A1- 1 657 626**
**EP-A2- 2 073 109**
**US-A- 5 818 430**
**US-A- 5 825 352**
**US-A1- 2002 034 836**
**US-A1- 2003 098 858**
**US-A1- 2005 041 018**
**US-A1- 2005 267 264**
**US-A1- 2008 296 073**
**US-A1- 2009 160 795**
**US-A1- 2009 174 675**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 275 911 B1

## Description

BACKGROUND

1. Technical Field

The present disclosure relates to a touch panel and a multi-touch detecting method thereof, and more particularly to a touch panel that uses at least one conductive film exhibiting electric anisotropy and a multi-touch detecting method thereof. There is also disclosed a touch device including means for implementing the detection methods.

2. Description of Related Art

Touch panels are becoming widely used in electronic products, such as mobile phones and navigation systems, for example, to serve as input devices. A new trend of the touch panel technology is towards having a multi-touch detection ability. There are several types of touch panels including resistive type, capacitive type, infrared type, and surface acoustic wave type, for example. Conventional resistive type touch panels do not support multi-touch detection. When multiple points on a resistive type touch panel are touched, the location of the touched points cannot be correctly determined. Conventional capacitive type touch panels, such as those disclosed in U.S. Patent Publication Nos. 2006/0097991 and 2008/0158181, can support multi-touch detection. However, a capacitive type touch panel requires several photolithographic steps in a manufacturing process, and the detecting method for determining the locations of multiple touched points on a capacitive type touch panel is complicated.

EP 2073109 A2 discloses a touch panel. The touch panel includes a first base, a second base, a first conductive layer disposed on the first base, two or more first electrodes located separately on opposite sides of the first conductive layer, a second conductive layer disposed on the second base and juxtaposed with the first conductive layer in a face-to-face manner, and two or more second electrodes located separately on opposite sides of the second conductive layer. The first conductive layer and the second conductive layer both include a plurality of carbon nanotube structures. The carbon nanotube films are parallel to each other and spaced apart from each other. Further, all the adjacent carbon nanotube structures are spaced apart a same distance. The carbon nanotube films in the first conductive layer cross the carbon nanotube films in the second conductive layer. The carbon nanotube films in the first conductive layer can be aligned along the second direction, and the first direction is perpendicular to the second direction. US 20050041018 A1 discloses a touch sensitive position sensor for detecting the position of an object in two dimensions. The position sensor includes a substrate defining a touch sensitive platform, first and second resistive bus-bars arranged spaced apart on the substrate, and an anisotropic conductive area arranged between the bus-bars such that currents induced in the anisotropic conductive area flow preferentially towards the bus-bars. US 5818430 discloses a touch screen of the voltage-divider type which includes a first and a second substrates, wherein said first substrate is spaced apart from said second substrate by a gap. The touch screen further includes a pair of regions formed of conductive material and formed on said first and second substrates respectively, in overlapping relationship; a pair of strips formed from a resistive material coupled to opposed edges of each conductive region such that said resistance strips of said first substrate extend in a substantially perpendicular direction to said resistance strips of said second substrate; and a circuit which applies a first reference voltage across the resistance strips of the first substrate, and subsequently applies a second reference voltage across the resistance strips of the second substrate.

US 20030098858 A1 discloses an apparatus for user input to a digital system. The apparatus includes a first sensing system having first sensors for sensing a user interaction using a sensing method of a first type, and a second sensing system having second sensors for sensing a user interaction using a sensing method of a second type, wherein said first and second sensors are co-located on a sensing surface. US 20080296073 A1 discloses apparatuses and methods provided for determining coordinates of simultaneous touches on a touch sensor pad. The touch sensor pad includes a first plurality of resistive sensor strips on a first resistive sheet and a second plurality of resistive sensor strips on a second resistive sheet. A user touches the touch sensor pad at multiple locations simultaneously. A controller of the touch sensor pad determines coordinates of each of the multiple locations of touch independently of other touches. To determine coordinates for a touch, the controller identifies a first strip of the first plurality of resistive sensor strips of the first resistive sheet that is physically contacting a second strip of the second plurality of resistive sensor strips of the second resistive sheet in response to the touch. The controller identifies the second strip. The controller measures a first voltage of the second strip applied by the first strip while in contact with the second strip in response to the touch. The controller measures a second voltage of the first strip applied by the second strip while in contact with the first strip in response to the touch. The controller determines coordinates of the touch based on the first voltage and the second voltage.

US 5825352 discloses a method for detecting an operative coupling of multiple fingers to a touch sensor. The method includes the steps of: scanning the touch sensor to (a) identify a first maxima in a signal corresponding to a first finger, (b) identify a minima following the first maxima, (c) identify a second maxima in a signal corresponding to a second finger following said minima, and proving an indication of the simultaneous presence of two fingers in response to identification of said first and second maxima. US 20090174675 A1 discloses a system and method for determining locations of a plurality of objects contemporaneously interacting with a capacitive touch pad having a sensing region. The method includes the steps of: generating a first capacitive profile associated with a first object and a second object contemporaneously in said sensing region; and determining locations of said first and second objects with respect to said sensing region utilizing said first capacitive profile. US 20020034836 A1 discloses a method of manufacturing a substrate having a transparent conductive film, and a substrate having a transparent conductive film using said method. The substrate having a transparent conductive film is obtained using a method wherein sputtering is carried out on a transparent insulating substrate using an indium oxide/tin oxide target under an atmosphere comprising a mixed gas of argon and oxygen, and wherein a ratio of oxygen to argon in said mixed gas is set such that said film has a maximum carrier density. EP 1657626 A1 discloses transparent touch panel and electronic apparatus, in which two substrates are attached to each other via a double-coated adhesive tape, and surrounding circuits and lead-out terminals are formed in peripheries of the two substrates. There are notches formed in the portions of the adhesive tape corresponding to lead-out terminals.

SUMMARY

According to the principles of the present invention, there is provided an improved resistive multi-touch touch panel as defined in the appended claim 1.

BRIEF DESCRIPTION OF THE DRAWINGS

The components in the drawings are not necessarily drawn to scale, the emphasis instead being placed upon clearly illustrating the principles of at least one embodiment. In the drawings, like reference numerals designate corresponding parts

Fig. 1 is an exploded perspective view of the exemplary embodiment of a touch panel of the present disclosure.

Fig. 2 is a plot of voltages measured at measuring points of a first conductive film of the touch panel along a direction in response to a two-point touch in which two points on the touch panel are touched and are distant from each other in the X-direction.

Fig. 3 is a plot of voltages measured at measuring points of the first conductive film of the touch panel along a direction in response to a two-point touch in which two points on the touch panel are touched and are close to each other in the X-direction.

Fig. 4 is a plot of voltages measured at measuring points of a second conductive film of the touch panel along a direction in response to a two-point touch in which the two points on the touch panel are touched and are distant from each other in the Y-direction.

Fig. 5 is a plot of voltages measured at measuring points of the second conductive film of the touch panel along a direction in response to a two-point touch in which two points on the touch panel are touched and are close to each other in the Y-direction.

Fig. 6 is a schematic view of a five-point touch in which five points on the touch panel are touched.

Fig. 7 is a plot of voltages measured at measuring points of the first conductive film of the touch panel in response to the five-point touch according to the first exemplary embodiment of a multi-touch detecting method of the present disclosure.

Fig. 8 is a plot of voltages measured at measuring points of the first conductive film of the touch panel in response to the five-point touch according to the second exemplary embodiment of a multi-touch detecting method of the present disclosure.

Figs. 9 to 11 are schematic views to demonstrate that the exemplary embodiments of the multi-touch detecting method of the present disclosure are capable of supporting different multi-touch functions implemented in the touch panel.

DETAILED DESCRIPTION

Reference will now be made to the drawings to describe various embodiments in detail.

The exemplary embodiment of the multi-touch detecting method of the present disclosure is adapted for detecting touched points, such as points touched by a user, on a touch panel 100, and includes: applying a first voltage to the sides of a first conductive film 113 through first and second electrodes 115, 114, respectively; applying a second voltage greater than the first voltage to the sides of a second conductive film 123 through third and fourth electrodes 126, 124, respectively; measuring sequentially voltages at the different measuring points of the first conductive film 113 through the second electrodes 114; obtaining a first local maximum voltage, a second local maximum voltage and a local minimum voltage from the voltages measured at the different measuring points of the first conductive film 113, the measuring point corresponding to the local minimum voltage being located between the measuring point corresponding to the first local maximum voltage and the measuring point corresponding to the second local maximum voltage; determining a first location of the touched points in the second direction (X) based on a location of the measuring point corresponding to the first local maximum voltage in the second direction (X); determining a second location of the touched points in the second direction (X) based on a location of the measuring point corresponding to the second local maximum voltage in the second direction (X); measuring sequentially voltages at the different measuring points of the second conductive film 123 through the fourth electrodes 124; obtaining a first local minimum voltage, a second local minimum voltage and a local maximum voltage from the voltages measured at the different measuring points of the second conductive film 123, the measuring point corresponding to the local maximum voltage being located between the measuring point corresponding to the first local minimum voltage and the measuring point corresponding to the second local minimum voltage; determining a first location of the touched points in the first direction (Y) based on a location of the measuring point corresponding to the first local minimum voltage in the first direction (Y); and determining a second location of the touched points in the first direction (Y) based on a location of the measuring point corresponding to the second local minimum voltage in the first direction (Y). It is noted that the exemplary embodiment is a non-limiting example and the multi-touch detecting method of the exemplary embodiment can be extended to a detection of more than two touched points.

The first layer 110 includes a first substrate 111, a first conductive film 113, an adhesive film 112, a first electrode 115, a plurality of second electrodes 114, and a plurality of conductive lines 116. The first conductive film 113 is disposed on the first substrate 111, and is bonded to the first substrate 111 through the adhesive film 112. The first conductive film 113 exhibits electric anisotropy, has a lower resistivity in a first direction (Y) than that in a second direction (X), i.e., Y-axis of a Cartesian plane, and further has two sides (not labeled) opposite to each other in the first direction (Y). The first electrode 115 is disposed at one of the sides of the first conductive film 113, and is coupled electrically to the aforesaid one of the sides of the first conductive film 113. The second electrodes 114, such as sensing electrodes, are uniformly disposed along the other side of the first conductive film 113, and are coupled electrically to different first measuring points of the other side of the first conductive film 113 distributed along the second direction (X), i.e., X-axis of the Cartesian plane, transverse to the first direction (Y). The conductive lines 116 extend respectively from the first and second electrodes 115, 114 towards one of the sides of the first layer 110 at which the recess 131 of the adhesive film 130 is formed. It is noted that the number of the second electrodes 114 employed in the exemplary embodiment shown in Fig. 1 is illustrative only and can be adjusted according to actual requirements.

The second layer 120 includes a second substrate 121, a second conductive film 123, an adhesive film 122, a third electrode 126, a plurality of fourth electrodes 124, and a plurality of conductive lines 125. The second conductive film 123 is disposed on the second substrate 121, is bonded to the second substrate 121 through the adhesive film 122, and is juxtaposed with the first conductive film 113 in a face-to-face manner. The second conductive film 123 exhibits electric anisotropy, has a lower resistivity in the second direction (X) than that in the first direction (Y), and further has two sides (not labeled) opposite to each other in the second direction (X). The third electrode 126 is disposed at one of the sides of the second conductive film 123, and is coupled electrically to the aforesaid one of the sides of the second conductive film 123. The fourth electrodes 124, such as sensing electrodes, are uniformly disposed along the other side of the second conductive film 123, and are coupled electrically to different second measuring points of the other side of the second conductive film 123 distributed along the first direction (Y). The conductive lines 125 extend respectively from the third and fourth electrodes 126, 124 towards one of the sides of the second layer 120 at which the recess 131 of the adhesive film 130 is formed. It is noted that the number of the fourth electrodes 124 employed in the exemplary embodiment shown in Fig. 1 is illustrative only and can be adjusted according to actual requirements.

The flexible print circuit 140 is provided with a plurality of metal pads 141 coupled electrically to the conductive lines 116, 125, respectively, and serves to transmit electric signals from an external source (not shown) through the conductive lines 116, 125 to the first, second, third, and fourth electrodes 115, 114, 126, 124 and vice versa.

Each of the first and second substrates 111, 121 can be made from a transparent material, such as polyethylene (PE), polycarbonate (PC), polyethylene terephthalate (PET), polymethyl methacrylate (PMMA), or glass. Each of the adhesive films 130, 112, 122, can be made from a thermal-cured adhesive or a UV-cured adhesive.

In this embodiment, each of the first and second conductive films 113, 123 can be manufactured by a method disclosed in Taiwanese Patent Publication No. 200920689. The first conductive film 113 can be made from a nanomaterial that has strings of interconnected carbon nanounits with each string substantially extending in the first direction (Y). The structure of the first conductive film 113 permits the first conductive film 113 to have the lower resistivity in the first direction (Y) and a higher resistivity in the second direction (X) which is about 50 to 350 times greater than the lower resistivity in the first direction (Y). In other words, the first conductive film 113 has an electric anisotropy ratio ranging from about 50 to 350. The second conductive film 123 can be made from a nanomaterial that has strings of interconnected carbon nanounits with each string substantially extending in the second direction (X). The structure of the second conductive film 123 permits the second conductive film 123 to have the lower resistivity in the second direction (X) and a higher resistivity in the first direction (Y) which is about 50 to 350 times greater than the lower resistivity in the second direction (X). In other words, the second conductive film 123 has an electric anisotropy ratio ranging from about 50 to 350. Each of the first and second conductive films 113, 123 has a surface resistivity ranging from about 1 kilohms per square to 800 kilohms per square. Preferably, each of the first and second conductive films 113, 123 has an electric anisotropy ratio ranging from about 100 to 200.

The first exemplary embodiment of a multi-touch detecting method of the present disclosure is adapted for detecting locations of touched points, such as the points touched by a user, on the touch panel 100, and includes the following steps. The first measuring points of the first conductive film 113 are scanned through the second electrodes 114, and x-components of the touched points are determined based on the response of the first measuring points. The second measuring points of the second conductive film 123 are scanned through the fourth electrodes 124, and y-components of the touched points, are determined based on the response of the second measuring points. A first voltage is applied to the sides of the first conductive film 113 through the first and second electrodes 115, 114, respectively, and a second voltage different from the first voltage is applied to at least one of the second measuring points with the location on the Y-axis adjacent to or overlapping one of the y-components through the corresponding fourth electrode 124. Voltages at the first measuring points with the locations on the X-axis adjacent to or overlapping the x-components are measured sequentially through the corresponding second electrodes 114, in response to the application of the second voltage. The aforesaid one of the y-components and one of the x-components corresponding to one of the first measuring points at which a local extreme voltage is measured are outputted, as the location of a corresponding one of the touched points.

In this embodiment, the step of scanning the first measuring points and determining x-components includes the sub-steps of applying the first voltage to the sides of the first conductive film 113 through the first and second electrodes 115, 114, respectively; applying the second voltage greater than the first voltage to the sides of the second conductive film 123 through the third and fourth electrodes 126, 124, respectively; measuring sequentially voltages at the first measuring points through the second electrodes 114 in response to the application of the second voltage to the sides of the second conductive film 123; obtaining local maximal voltages and local minimal voltage(s) among the local maximal voltages from the voltages measured at the first measuring points; and determining the x-components based on the locations of the first measuring points corresponding to the local maximal voltages on the X-axis, respectively. In addition, the step of scanning the second measuring points and determining y-components includes the following sub-steps. Measuring sequentially voltages at the second measuring points through the fourth electrodes 124 in response to the application of the first voltage to the sides of the first conductive film 113; obtaining local minimal voltages and local maximal voltage(s) among the local maximal voltages from the voltages measured at the second measuring points; and determining the y-components based on the locations of the second measuring points corresponding to the local minimal voltages on the Y-axis, respectively.

Preferably, in the measuring sub-steps, the voltages are measured in such a manner that while each of measuring points is measured, the first voltage is applied to the rest of the first measuring points and the second voltage is applied to the rest of the second measuring points, in order to eliminate an adverse effect on the measuring point being measured caused by the rest of the measuring points and to improve the accuracy of the measured voltage at the measuring point being measured.

When the touch panel 100 is not touched, the first and second conductive films 113, 123 are insulated from each other, and the voltages measured at the second electrodes 114 are all equal to the first voltage, whereas the voltages measured at the fourth electrodes 124 are all equal to the second voltage. As an example, when two points on the touch panel 100 are touched, the first and second conductive films 113, 123 are coupled electrically to each other at the touched points, and the voltages at the corresponding second electrodes 114 corresponding to the touched points rise above the first voltage (see Figs. 2 and 3), whereas the voltages at the corresponding fourth electrodes 124 corresponding to the touched points drop below the second voltage (see Figs. 4 and 5).

When the two touched points are not close to each other, the response of the voltages at the corresponding second electrodes 114 and the corresponding fourth electrodes 124 corresponding to the two selected points on the touch panel 100 follows a pattern different from that of the voltages at the corresponding second electrodes 114 and the corresponding fourth electrodes 124 when the two touched points are close to each other. Hence, determination of the x-components or the y-components will be based on one set of equations when the touched points are distant from each other or on a different set of equations when the touched points are close to each other, and will be described in detail as follows.

Referring to Fig. 2, in combination with Fig. 1, assume, in response to the two touched points on the touch panel 100, that a first local maximal voltage $V_n$ is measured at the $n^{th}$ one of the first measuring points, that a second local maximal voltage $V_m$ is measured at the $m^{th}$ one of the first measuring points, and that $n \geq 2$, and $m \geq n+3$, which represents that the touched points are distant from each other on the X-axis. A first x-component $X_a$ corresponding to the location of a first one of the touched points is determined by one of the following equations according to a respective one of the following conditions:

$$\text{if } V_{n-1} < V_{n+1}, \text{ then } X_a = X_n + \frac{P_x}{2} \times \frac{V_{n+1} - V_{n-1}}{V_n - V_{n-1}};$$

$$\text{if } V_{n-1} = V_{n+1}, \text{ then } X_a = X_n;$$

and

$$\text{if } V_{n-1} > V_{n+1}, \text{ then } X_a = X_n + \frac{P_x}{2} \times \frac{V_{n+1} - V_{n-1}}{V_n - V_{n+1}};$$

where $V_{n-1}$ is the voltage measured at the n-1$^{th}$ one of the first measuring points, $V_{n+1}$ is the voltage measured at the n+1$^{th}$ one of the first measuring points, $X_n$ is the location of the $n^{th}$ one of the first measuring points on the X-axis, and $P_x$ is a distance between two adjacent ones of the first measuring points.

In addition, a second x-component $X_b$ corresponding to the location of a second one of the touched points is determined by one of the following equations according to a respective one of the following conditions:

$$\text{if } V_{m-1} < V_{m+1}, \text{ then } X_b = X_m + \frac{P_x}{2} \times \frac{V_{m+1} - V_{m-1}}{V_m - V_{m-1}};$$

$$\text{if } V_{m-1} = V_{m+1}, \text{ then } X_b = X_m;$$

and

$$\text{if } V_{m-1} > V_{m+1}, \text{ then } X_b = X_m + \frac{P_x}{2} \times \frac{V_{m+1} - V_{m-1}}{V_m - V_{m+1}};$$

where $V_{m-1}$ is the voltage measured at the m-1$^{th}$ one of the first measuring points, $V_{m+1}$ is the voltage measured at the m+1$^{th}$ one of the first measuring points, and $X_m$ is the location of the $m^{th}$ one of the first measuring points on the X-axis.

Referring to Fig. 3, in combination with Fig. 1, assume, in response to the two touched points on the touch panel 100, that is m=n+2, which represents that the touched points are close to each other on the X-axis, and that a local minimal voltage $V_{n+1}$ (=$V_{m-1}$) is measured at the n+1$^{th}$, i.e., m-1$^{th}$, one of the first measuring points, and can be separated into $V_{n+1}'$ and $V_{m-1}''$ as functions of ($V_a$, $V_{n-1}$, $V_n$, $V_{n+1}$, $V_m$, $V_{m+1}$) defined below. A first x-component $X_a$ and a second x-component $X_b$ corresponding respectively to the locations of the two touched points are determined by the following equations according to respective ones of the following conditions, respectively:

$$V_{n+1}' = (V_{n+1} - V_a) \times \frac{(V_n - V_a) \times (V_n - V_{n-1})}{(V_n - V_a) \times (V_n - V_{n-1}) + (V_m - V_a) \times (V_m - V_{m+1})} + V_a;$$

$$V_{m-1}''=(V_{n+1}-V_a)\times\frac{(V_m-V_a)\times(V_m-V_{m+1})}{(V_n-V_a)\times(V_n-V_{n-1})+(V_m-V_a)\times(V_m-V_{m+1})}+V_a\,;$$

$$\text{if } V_{n-1}<V_{n+1}'\text{, then } X_a=X_n+\frac{P_x}{2}\times\frac{V_{n+1}'-V_{n-1}}{V_n-V_{n-1}}\,;$$

$$\text{if } V_{n-1}=V_{n+1}'\text{, then } X_a=X_n\,;$$

$$\text{if } V_{n-1}>V_{n+1}'\text{, then } X_a=X_n+\frac{P_x}{2}\times\frac{V_{n+1}'-V_{n-1}}{V_n-V_{n+1}'}\,;$$

$$\text{if } V_{m-1}''<V_{m+1}\text{, then } X_b=X_m+\frac{P_x}{2}\times\frac{V_{m+1}-V_{m-1}''}{V_m-V_{m-1}''}\,;$$

$$\text{if } V_{m-1}''=V_{m+1}\text{, then } X_b=X_m\,;$$

and

$$\text{if } V_{m-1}''>V_{m+1}\text{, then } X_b=X_m+\frac{P_x}{2}\times\frac{V_{m+1}-V_{m-1}''}{V_m-V_{m+1}}\,;$$

where $V_a$ is the first voltage.

Similarly, referring to Fig. 4, in combination with Fig. 1, assume, in response to the two touched points on the touch panel 100, that a first local minimal voltage $V_S$ is measured at the $s^{th}$ one of the second measuring points, that a second local minimal voltage $V_t$ is measured at the $t^{th}$ one of the second measuring points, and that $s\geq2$, and $t\geq s+3$, which represents that the touched points are distant from each other on the Y-axis. A first y-component $Y_a$ corresponding to the location of the first one of the touched points is determined by one of the following equations according to a respective one of the following conditions:

$$\text{if } V_{s-1}<V_{s+1}\text{, then } Y_a=Y_s+\frac{P_y}{2}\times\frac{V_{s-1}-V_{s+1}}{V_{s+1}-V_s}\,;$$

$$\text{if } V_{s-1}=V_{s+1}\text{, then } Y_a=Y_s\,;$$

and

$$\text{if } V_{s-1}>V_{s+1}\text{, then } Y_a=Y_s+\frac{P_y}{2}\times\frac{V_{s-1}-V_{s+1}}{V_{s-1}-V_s}\,;$$

where $V_{s-1}$ is the voltage measured at the $s\text{-}1^{th}$ one of the second measuring points, $V_{s+1}$ is the voltage measured at the $s+1^{th}$ one of the second measuring points, $Y_s$ is the location of the $s^{th}$ one of the second measuring points on the Y-axis, and Py is a distance between two adjacent ones of the second measuring points.

In addition, a second y-component $Y_b$ corresponding to the location of the second one of the touched points is determined by one of the following equations according to a respective one of the following conditions:

$$\text{if } V_{t-1} < V_{t+1}\text{, then } Y_b = Y_t + \frac{P_y}{2} \times \frac{V_{t-1} - V_{t+1}}{V_{t+1} - V_t};$$

$$\text{if } V_{t-1} = V_{t+1}\text{, then } Y_b = Y_t;$$

and

$$\text{if } V_{t-1} > V_{t+1}\text{, then } Y_b = Y_t + \frac{P_y}{2} \times \frac{V_{t-1} - V_{t+1}}{V_{t-1} - V_t};$$

where $V_{t-1}$ is the voltage measured at the t-1$^{th}$ one of the second measuring points, $V_{t+1}$ is the voltage measured at the t+1$^{th}$ one of the second measuring points, and $Y_t$ is the location of the t$^{th}$ one of the second measuring points on the Y-axis.

Referring to Fig. 5, in combination with Fig. 1, assume, in response to the two touched points on the touch panel 100, that t=s+2, which represents that the touched points are close to each other on the Y-axis, and that a local maximal voltage $V_{s+1}$ (=$V_{t-1}$) is measured at the s+1$^{th}$, i.e., t-1$^{th}$, one of the second measuring points, and can be separated into $V_{s+1}$' and $V_{t-1}$" as functions of ($V_b$, $V_{s-1}$, $V_s$, $V_{s+1}$, $V_t$, $V_{t+1}$) defined below. A first y-component $Y_a$ and a second y-component $Y_b$ corresponding respectively to the locations of the touched points are determined by the following equations according to respective ones of the following conditions, respectively:

$$V_{s+1}' = V_b - (V_b - V_{s+1}) \times \frac{(V_b - V_s) \times (V_{s-1} - V_s)}{(V_b - V_s) \times (V_{s-1} - V_s) + (V_b - V_t) \times (V_{t+1} - V_t)};$$

$$V_{t-1}'' = V_b - (V_b - V_{s+1}) \times \frac{(V_b - V_t) \times (V_{t+1} - V_t)}{(V_b - V_s) \times (V_{s-1} - V_s) + (V_b - V_t) \times (V_{t+1} - V_t)};$$

$$\text{if } V_{s-1} < V_{s+1}'\text{, then } Y_a = Y_s + \frac{P_y}{2} \times \frac{V_{s-1} - V_{s+1}'}{V_{s+1}' - V_s};$$

$$\text{if } V_{s-1} = V_{s+1}'\text{, then } Y_a = Y_s;$$

$$\text{if } V_{s-1} > V_{s+1}'\text{, then } Y_a = Y_s + \frac{P_y}{2} \times \frac{V_{s-1} - V_{s+1}'}{V_{s-1} - V_s};$$

$$\text{if } V_{t-1}'' < V_{t+1}\text{, then } Y_b = Y_t + \frac{P_y}{2} \times \frac{V_{t-1}'' - V_{t+1}}{V_{t+1} - V_t};$$

$$\text{if } V_{t-1}'' = V_{t+1}\text{, then } Y_b = Y_t;$$

and

$$\text{if } V_{t-1}'' > V_{t+1}\text{, then } Y_b = Y_t + \frac{P_y}{2} \times \frac{V_{t-1}'' - V_{t+1}}{V_{t-1}'' - V_t};$$

where $V_b$ is the second voltage.

Although the x-components and the y-components corresponding to the locations of the touched points are determined, the exact pairs of the x-components and the y-components corresponding to the locations of the touched points are yet to be determined. The following describes how the exact pairs of the x-components and the y-components are determined. Referring to Fig. 6, in combination with Fig. 1, assume the following conditions. Five touched points ($C_{11}$, $C_{21}$, $C_{23}$, $C_{31}$, $C_{32}$) on the touch panel 100 are touched. The touched points ($C_{11}$, $C_{21}$, $C_{31}$) are aligned in the first direction (Y). The touched points ($C_{21}$, $C_{23}$) are aligned in the second direction (X). The touched points ($C_{31}$, $C_{32}$) are aligned in the second direction (X). There are eight first measuring points with the locations on the X-axis of $X_{m-3} \sim X_{m+4}$, respectively. There are eight second measuring points with the locations on the Y-axis of $Y_{n-3} \sim Y_{n+4}$, respectively; that the x-components are determined to be $x_1$, $x_2$, and $x_3$. The y-components are determined to be $y_1$, $y_2$, and $y_3$. The x-components $x_1$, $x_2$, $x_3$ and the y-components $y_1$, $y_2$, $y_3$ can be paired into nine locations including the locations of the touched points ($C_{11}$, $C_{21}$, $C_{23}$, $C_{31}$, $C_{32}$) and the locations of false points ($C_{12}$, $C_{13}$, $C_{22}$, $C_{33}$). The following describes how the false points ($C_{12}$, $C_{13}$, $C_{22}$, $C_{33}$) are determined based on the voltages measured at the first measuring points in response to the application of the second voltage.

According to the obtained x-components $x_1$, $x_2$, $x_3$ and the y-components $y_1$, $y_2$, $y_3$, three first regions ($S_1$, $S_2$, $S_3$) on the first conductive film 113 corresponding respectively to the x-components $x_1$, $x_2$, $x_3$ can be found, and three second regions ($D_1$, $D_2$, $D_3$) on the second conductive film 123 corresponding respectively to the y-components $y_1$, $y_2$, $y_3$ can be found. The first one of the first regions ($S_1$) corresponds to two of the first measuring points with the locations on the X-axis, i.e., $X_{m-3}$ and $X_{m-2}$, adjacent to a first one of the x-components $x_1$. The second one of the first regions ($S_2$) corresponds to two of the first measuring points with the locations on the X-axis, i.e., $X_{m-1}$ and $X_m$, adjacent to a second one of the x-components $x_2$. The third one of the first regions ($S_3$) corresponds to one of the first measuring points with the location on the X-axis, i.e., $X_{m+3}$, overlapping a third one of the x-components $x_3$. The first one of the second regions ($D_1$) corresponds to one of the second measuring points with the location on the Y-axis, i.e., $Y_{n-3}$, overlapping a first one of the y-components $y_1$. The second one of the second regions ($D_2$) corresponds to two of the second measuring points with the locations on the Y-axis, i.e., $Y_{n-1}$ and $Y_n$, adjacent to a second one of the y-components $y_2$. The third one of the second regions ($D_3$) corresponds to two of the second measuring points with the locations on the Y-axis, i.e., $Y_{n+2}$ and $Y_{n+3}$, adjacent to a third one of the y-components $y_3$.

After the application of the first voltage to the sides of the first conductive film 113 through the first and second electrodes 115, 114, respectively, the second voltage is first applied to the second measuring point with the location on the Y-axis of $Y_{n-3}$, which corresponds to the first one of the second regions ($D_1$), through the corresponding fourth electrode 124. The voltages measured at the first measuring points with locations $X_{m-3}$, $X_{m-2}$, $X_{m-1}$, $X_m$, and $X_{m+3}$ on the X-axis through the corresponding second electrodes 114 in response to the application of the second voltage are shown in Fig. 7(A). A local extreme voltage is measured at the first measuring point with the location $X_{m-2}$ on the X-axis, which means there is a touched point ($C_{11}$) located at the intersection of the regions ($S_1$, $D_1$), and there are two false points ($C_{12}$, $C_{13}$) located at the intersection of the regions ($S_2$, $D_1$) and the intersection of the regions ($S_3$, $D_1$), respectively. Hence, the location of the touched point ($C_{11}$) is determined to be ($x_1$, $y_1$). It is noted that, because the second voltage is greater than the first voltage in this embodiment, the local extreme voltage is a local maximal voltage. Alternatively, the second voltage can be smaller than the first voltage. As such, the local extreme voltage thus measured will be a local minimal voltage.

Next, the second voltage is applied to the second measuring points with the locations $Y_{n-1}$ and $Y_n$ on the Y-axis, which correspond to the second one of the second regions ($D_2$), through the corresponding fourth electrodes 124. The voltages measured at the first measuring points with locations $X_{m-3}$, $X_{m-2}$, $X_{m-1}$, $X_m$, and $X_{m+3}$ on the X-axis through the corresponding second electrodes 114 in response to the application of the second voltage are shown in Fig. 7(B). Two local extreme voltages are measured at the first measuring points with the locations $X_{m-2}$ and $X_{m+3}$ on the X-axis, respectively, which means there are two touched points ($C_{21}$, $C_{23}$) located at the intersection of the regions ($S_1$, $D_2$) and the intersection of the regions ($S_3$, $D_2$), respectively, and there is a false point ($C_{22}$) located at the intersection of the regions ($S_2$, $D_2$). Hence, the locations of the touched points ($C_{21}$, $C_{23}$) are determined to be ($x_1$, $y_2$) and ($x_3$, $y_2$), respectively.

Finally, the second voltage is applied to the second measuring points with the locations $Y_{n+2}$ and $Y_{n+3}$ on the Y-axis of, which correspond to the third one of the second regions ($D_3$), through the corresponding fourth electrodes 124. The voltages measured at the first measuring points with locations $X_{m-3}$, $X_{m-2}$, $X_{m-1}$, $X_m$, and $X_{m+3}$ on the X-axis through the corresponding second electrodes 114 in response to the application of the second voltage are shown in Fig. 7(C). Two local extreme voltages are measured at the first measuring points with the locations $X_{m-2}$ and $X_m$ on the X-axis, respectively, which means there are two touched points ($C_{31}$, $C_{32}$) located at the intersection of the regions of ($S_1$, $D_3$) and the intersection of the regions ($S_2$, $D_3$), respectively, and there is a false point ($C_{32}$) located at the intersection of the regions ($S_3$, $D_3$). Hence, the locations of the touched points ($C_{31}$, $C_{32}$) are determined to be ($x_1$, $y_3$) and ($x_2$, $y_3$), respectively.

Preferably, in the step of measuring voltages at the first measuring points in response to the application of the second voltage, the voltages are measured in such a manner that while each of the first measuring points is measured, the first voltage is applied to the rest of the first measuring points and to the second measuring points with the locations on the Y-axis adjacent to or overlapping the rest of the y-components. In this embodiment, the multi-touch detecting method further includes: providing the first or second voltage to at least one of the second measuring points located between two of the second measuring points with the locations on the Y-axis adjacent to or overlapping two adjacent ones of the y-components, respectively.

The second exemplary embodiment of a multi-touch detecting method of the present disclosure is adapted for detecting locations of touched points on the touch panel 100, and includes the following steps. There is the step of scanning the first measuring points and determining x-components of the first embodiment. There is the step of scanning the second measuring points and determining y-components of the first embodiment. There is the step of applying the first voltage of the first embodiment. The step (d) is the step of applying the second voltage to the second measuring point(s) corresponding to at least one of the second regions ($D_1$, $D_2$, $D_3$) through the corresponding fourth electrode 124, and measuring sequentially voltages at the first measuring points with the locations on the X-axis adjacent to or overlapping the x-components through the corresponding second electrodes 114, in response to the application of the second voltage. The step (e) after step (d) is step of simultaneously applying the second voltage to the second measuring point(s) corresponding to the aforesaid at least one of the second regions ($D_1$, $D_2$, $D_3$) in step (d), and to at least one of the second measuring points corresponding to another one of the second regions ($D_1$, $D_2$, $D_3$) through the corresponding fourth electrode 124, and measuring sequentially voltages at the first measuring points with the locations on the X-axis adjacent to or overlapping the x-components through the corresponding second electrodes 114, in response to the application of the second voltage. The step (f) is the step of outputting the aforesaid one of the y-components and one of the x-components, which corresponds to one of the first measuring points at which a local extreme voltage is measured in step (e), as the location of a corresponding one of the touched points when the voltages measured at the aforesaid one of the first measuring points in steps (e) and (d) are different. The locations of the rest of the touched points are determined in a similar manner as steps (d) to (f).

In more detail, referring to Fig. 6, in combination with Fig. 1, after the application of the first voltage to the sides of the first conductive film 113 through the first and second electrodes 115, 114, respectively, the second voltage is first applied to the second measuring point with the location $Y_{n-3}$ on the Y-axis, which corresponds to the first one of the second regions ($D_1$) through the corresponding fourth electrode 124 in step (d). The voltages measured at the first measuring points with locations $X_{m-3}$, $X_{m-2}$, $X_{m-1}$, $X_m$, and $X_{m+3}$ on the X-axis through the corresponding second electrodes 114 in response to the application of the second voltage are shown in Fig. 8(A). A local extreme voltage is measured at the first measuring point with the location $X_{m-2}$ on the X-axis, which means there is a touched points ($C_{11}$) located at the intersection of the regions ($S_1$, $D_1$), and there are two false points ($C_{12}$, $C_{13}$) located at the intersection of the regions ($S_2$, $D_1$) and the intersection of the regions ($S_3$, $D_1$), respectively. Hence, the location of the touched point ($C_{11}$) is determined to be ($x_1$, $y_1$).

Next, the second voltage is simultaneously applied to the second measuring point with the location $Y_{n-3}$ on the Y-axis and to the second measuring points with the locations $Y_{n-1}$ and $Y_n$ on the Y-axis, which correspond to the second one of the second regions ($D_2$), through the corresponding fourth electrodes 124 in step (e), i.e., the second regions ($D_1$, $D_2$) are applied with the second voltage at the same time. The voltages measured at the first measuring points with locations $X_{m-3}$, $X_{m-2}$, $X_{m-1}$, $X_m$, and $X_{m+3}$ on the X-axis through the corresponding second electrodes 114 in response to the application of the second voltage are shown in Fig. 8(B). Two local extreme voltages are measured at the first measuring points with the locations $X_{m-2}$ and $X_{m+3}$ on the X-axis, respectively. The voltages measured at the first measuring point with the location $X_{m-2}$ on the X-axis in step (e) (see Fig. 8(B)) and step (d) (see Fig. 8(A)) are different, and the voltages measured at the first measuring point with the location $X_{m+3}$ on the X-axis in step (e) (see Fig. 8(B)) and step (d) (see Fig. 8(A)) are different, which means there are two touched points ($C_{21}$, $C_{23}$) located at the intersection of the regions ($S_1$, $D_2$) and the intersection of the regions ($S_3$, $D_2$), respectively, and there is a false point ($C_{22}$) located at the intersection of the regions ($S_2$, $D_2$). Hence, the locations of the touched points ($C_{21}$, $C_{23}$) are determined to be ($x_1$, $y_2$) and ($x_3$, $y_2$), respectively.

Finally, the second voltage is simultaneously applied to the second measuring point with the location $Y_{n-3}$ on the Y-axis, to the second measuring points with the locations $Y_{n-1}$ and $Y_n$ on the Y-axis, and to the second measuring points with the locations $Y_{n+2}$ and $Y_{n+3}$ on the Y-axis, which correspond to the third one of the second regions ($D_3$), through the corresponding fourth electrodes 124 in step (e), i.e., all the second regions ($D_1$, $D_2$, $D_3$) are applied with the second voltage at the same time. The voltages measured at the first measuring points with locations $X_{m-3}$, $X_{m-2}$, $X_{m-1}$, $X_m$, and $X_{m+3}$ on the X-axis through the corresponding second electrodes 114 in response to the application of the second voltage are shown in Fig. 8(C). Three local extreme voltages are measured at the first measuring points with the locations $X_{m-2}$, $X_m$ and $X_{m+3}$ on the X-axis. The voltages measured at the first measuring point with the location $X_{m-2}$ on the X-axis in step (e) (see Fig. 8(C)) and step (d) (see Fig. 8(B)) are different, the voltages measured at the first measuring point with the location $X_m$ on the X-axis in step (e) (see Fig. 8(C)) and step (d) (see Fig. 8(B)) are different, and the voltages measured at the first measuring point with the location $X_{m+3}$ on the X-axis in step (e) (see Fig. 8(C)) and step (d) (see Fig. 8(B)) are substantially the same, which means there are two touched points ($C_{31}$, $C_{32}$) located at the intersection of the regions ($S_1$, $D_3$) and the intersection of the regions ($S_2$, $D_3$), respectively, and there is a false point ($C_{33}$) located at the intersection of the regions ($S_3$, $D_3$). Hence, the locations of the touched points ($C_{31}$, $C_{32}$) are determined to be ($x_1$, $y_3$) and ($x_2$, $y_3$), respectively.

Preferably, in steps (d) and (e), the voltages are measured in such a manner that while each of the first measuring points is measured, the first voltage is applied to the rest of the first measuring points and to the second measuring points with the locations on the Y-axis adjacent to or overlapping the rest of the y-components. In this embodiment, the multi-touch detecting method further includes: (g) providing the first or second voltage to at least one of the second measuring points located between two of the second measuring points with the locations on the Y-axis adjacent to or overlapping two adjacent ones of the y-components, respectively.

As described above, the locations of the touched points can be thus determined. Exemplary functions provided by the embodiments of the multi-touch detecting method are described below.

Fig. 9 shows "zoom-in" and "zoom-out" functions provided by the embodiments of the multi-touch detecting method with two two-point touches on the touch panel 100 executed sequentially at a scanning interval. In the first two-point touch, the locations of the touched points (A, B) on the touch panel are determined to be ($x_1$, $y_1$) and ($x_2$, $y_2$), respectively, with a first distance therebetween. In the second two-point touch, the locations of the touched points (A', B') on the touch panel are determined to be ($x_1'$, $y_1'$) and ($x_2'$, $y_2'$), respectively, with a second distance therebetween greater than the first distance. As such, the "zoom-in" function can be triggered by first executing the first two-point touch and then the second two-point touch, and the "zoom-out" function can be triggered by first executing the second two-point touch and then the second two-point touch.

Fig. 10 shows a "translation" function provided by the embodiments of the multi-touch detecting method with two two-point touches on the touch panel executed sequentially at a scanning interval. In the first two-point touch, the locations of the touched points (A, B) on the touch panel are determined to be ($x_1$, $y_1$) and ($x_2$, $y_2$), respectively. In the second two-point touch, the locations of the touched points (A', B') on the touch panel 100 are determined to be ($x_1'$, $y_1'$) and ($x_2'$, $y_2$), respectively, with the movement from A to A' being substantially the same as the movement from B to B'. As such, the "translation" function can be triggered by executing the first and second two-point touches sequentially.

Fig. 11 shows a "rotation" function provided by the embodiment of the multi-touch detecting method with two two-point touches on the touch panel executed sequentially at a scanning interval. In the first two-point touch, the locations of the touched points (A, B) on the touch panel are determined to be ($x_1$, $y_1$) and ($x_2$, $y_2$), respectively. In the second two-point touch, the locations of the touched points (A', B') on the touch panel 100 are determined to be ($x_1'$, $y_1'$) and ($x_2'$, $y_2$), respectively, with the rotation from A to A' and the rotation from B to B' being in the same direction, i.e., a clockwise direction or a counterclockwise direction. As such, the "rotation" function can be triggered by executing the first and second two-point touches sequentially.

In summary, with the use of the first and second conductive films 113, 123 exhibiting electrical anisotropy, the structure of the touch panel 100 is simple and the multi-touch detecting method implemented by the touch panel 100 is simple.

The steps of all the methods described above will be performed by signal processing circuitry included in a touch screen device incorporating the panel, or by separate circuitry. Circuitry in this context includes analogue and digital circuitry. Digital circuitry may be special purpose hardware and/or may include programmable DSP or microprocessor circuitry, provided with suitable program instructions.

It is to be understood that even though numerous characteristics and advantages of the present embodiments have been set forth in the foregoing description, together with details of the structures and functions of the embodiments, the disclosure is illustrative only; and that changes may be made in detail, especially in matters of shape, size, and arrangement of parts, within the principles of the embodiments, to the full extent indicated by the broad general meaning of the terms in which the appended claims are expressed.

## Claims

**1.** A touch panel (100), comprising:

a first substrate (111);
a second substrate (121);
a first conductive film (113) disposed on the first substrate (111), wherein the first conductive film (113) exhibits electric anisotropy and has a lower resistivity in a first direction (Y) than that in a second direction (X) transverse to the first direction (Y), and further comprises two sides opposite to each other in the first direction (Y);
a second conductive film (123) disposed on the second substrate (121) and juxtaposed with the first conductive film (113) in a face-to-face manner, wherein the second conductive film (123) exhibits electric anisotropy and has a lower resistivity in the second direction (X) than that in the first direction (Y), and further comprises two sides opposite to each other in the second direction (X), and wherein the first and second conductive films are insulated from each other and are coupled electrically to each other through touch;
a plurality of first conductive lines (116);
a plurality of second conductive lines (125); and
an adhesive film (130) extending along peripheral sides of the first and second conductive films (113, 123) and bonding the first and second conductive films (113, 123) together;

wherein the touch panel (100) further comprises a first electrode (115) disposed at one of the sides of the first conductive film (113), a plurality of second electrodes (114) uniformly disposed along the other one of the sides of the first conductive film (113), a third electrode (126) disposed at one of the sides of the second conductive film (123), and a plurality of fourth electrodes (124) uniformly disposed along the other one of the sides of the second conductive film (123), the first electrode (115) is coupled electrically to the one of the sides of the first conductive film (113), the second electrodes (114) are coupled electrically to the other one of the sides of the first conductive film (113), the third electrode (126) is coupled electrically to the one of the sides of the second conductive film (123), and the fourth electrodes (124) are coupled electrically to the other one of the sides of the second conductive film (123);
**characterized in that**: the adhesive film (130) defines a recess (131) at one peripheral side thereof, the first conductive lines (116) extend from the first electrode (115) and the second electrodes (114) towards the one of the sides of the first conductive film (113) at which the recess (131) of the adhesive film (130) is formed, and the second conductive lines (125) extend from the third electrode (126) and the fourth electrodes (124) towards the one of the sides of the second conductive film (123) at which the recess (131) of the adhesive film (130) is formed;
**in that** each of the first and second conductive films (113, 123) has an electric anisotropy ratio ranging from about 100 to 200;
and **in that** the touch panel further comprises circuitry for enabling multi-touch detection, the circuitry being configured such that first measuring points of the first conductive film (113) distributed along an X-axis corresponding to the second direction (X) are scanned through the second electrodes (114), and x-components of touched points are determined based on the response of the first measuring points; second measuring points of the second conductive film (123) distributed along a Y-axis corresponding to the first direction (Y) are scanned through the fourth electrodes (124), and y-components of the touched points are determined based on the response of the second measuring points; a first voltage is applied to the first conductive film (113) through the first and second electrodes (115, 114), respectively; and a second voltage different from the first voltage is applied to at least one of the second measuring points with the location on the Y-axis adjacent to or overlapping one of the y-components through the corresponding fourth electrode (124), voltages at the first measuring points with the locations on the X-axis adjacent to or overlapping the x-components are sequentially measured through the corresponding second electrodes (114), in response to the application of the second voltage, and the one of the y-components and one of the x-components, which corresponds to one of the first measuring points at which a local extreme voltage is measured, are outputted as the location of a corresponding one of the touched points.

**2.** The touch panel (100) of claim 1, wherein the first conductive film (113) is made from a nanomaterial that has strings of carbon nanounits with each string substantially extending in the first direction (Y), the second conductive film (123) being made from a nanomaterial that has strings of carbon nanounits with each string substantially extending in the second direction (X).

**3.** The touch panel (100) of claim 1, wherein one of the first conductive lines (116) is connected with the first electrode (115), and the other first conductive lines (116) are connected with the second electrodes (114), respectively, one of the second conductive lines (125) is connected with the third electrode (126), and the other second conductive lines (125) are connected with the fourth electrodes (124), respectively.

**4.** The touch panel (100) of claim 3, wherein the one of the first conductive lines (116) connected with the first electrode (115) forms a substantially Z-shaped profile, and the one of the second conductive lines (125) connected with the third electrode (126) forms a substantially L-shaped profile.

**5.** The touch panel (100) of claim 1, wherein part of the first conductive lines (115) connected with the second electrodes (114) form a substantially L-shaped profile, part of the first conductive lines (115) connected with the second electrodes (114) form a substantially straight line-shaped profile, and the second conductive lines (125) connected with the fourth electrodes (124) form a substantially Z-shaped profile.

**6.** The touch panel (100) of claim 1, further comprising a plurality of spacers disposed between the first and second conductive films (113, 123).

7. The touch panel (100) of claim 1, wherein the first conductive film (113) has a surface resistivity ranging from about 1 kilohms per square to 800 kilohms per square and the second conductive film (123) has a surface resistivity ranging from about 1 kilohms per square to 800 kilohms per square.

**Patentansprüche**

1. Ein Berührungsbildschirm (100), der Folgendes beinhaltet:

ein erstes Substrat (111);
ein zweites Substrat (121);
eine erste leitfähige Folie (113), die auf dem ersten Substrat (111) angeordnet ist,
wobei die erste leitfähige Folie (113) elektrische Anisotropie aufweist und einen niedrigeren spezifischen Widerstand in einer ersten Richtung (Y) als den in einer zur ersten Richtung (Y) querlaufenden zweiten Richtung (X) besitzt, und ferner zwei einander in der ersten Richtung (Y) gegenüberliegende Seiten beinhaltet;
eine zweite leitfähige Folie (123), die auf dem zweiten Substrat (121) und in Juxtaposition mit der ersten leitfähige Folie (113) auf eine Weise mit einander zugewandten Oberflächen angeordnet ist, wobei die zweite leitfähige Folie (123) elektrische Anisotropie aufweist und einen niedrigeren spezifischen Widerstand in der zweiten Richtung (X) als den in der ersten Richtung (Y) aufweist, und ferner zwei einander in der zweiten Richtung (X) gegenüberliegende Seiten beinhaltet, und wobei die erste und die zweite leitfähige Folie voneinander isoliert sind und durch Berührung elektrisch aneinander gekoppelt werden;
eine Vielzahl von ersten leitfähigen Bahnen (116);
eine Vielzahl von zweiten leitfähigen Bahnen (125); und
eine Klebefolie (130), die sich entlang peripheren Seiten der ersten und der zweiten leitfähigen Folie (113, 123) erstreckt und die erste und die zweite leitfähige Folie (113, 123) aneinander klebt;

wobei der Berührungsbildschirm (100) ferner eine erste Elektrode (115), die an einer der Seiten der ersten leitfähigen Folie (113) angeordnet ist, eine Vielzahl von zweiten Elektroden (114), die gleichmäßig entlang der anderen der Seiten der ersten leitfähigen Folie (113) angeordnet sind, eine dritte Elektrode (126), die an einer der Seiten der zweiten leitfähigen Folie (123) angeordnet ist, und eine Vielzahl von vierten Elektroden (124), die gleichmäßig entlang der anderen der Seiten der zweiten leitfähigen Folie (123) angeordnet sind, beinhaltet, wobei die erste Elektrode (115) elektrisch an die eine der Seiten der ersten leitfähigen Folie (113) gekoppelt ist, die zweiten Elektroden (114) elektrisch an die andere der Seiten der ersten leitfähigen Folie (113) gekoppelt sind, die dritte Elektrode (126) elektrisch an die eine der Seiten der zweiten leitfähigen Folie (123) gekoppelt ist, und die vierten Elektroden (124) elektrisch an die andere der Seiten der zweiten leitfähigen Folie (123) gekoppelt sind;
**dadurch gekennzeichnet, dass**: die Klebefolie (130) eine Aussparung (131) an einer peripheren Seite davon definiert, sich die ersten leitfähigen Bahnen (116) von der ersten Elektrode (115) und den zweiten Elektroden (114) in Richtung auf die eine der Seiten der ersten leitfähigen Folie (113) erstrecken, an der die Aussparung (131) der Klebefolie (130) ausgebildet ist, und sich die zweiten leitfähigen Bahnen (125) von der dritten Elektrode (126) und den vierten Elektroden (124) in Richtung auf die eine der Seiten der zweiten leitfähigen Folie (123) erstrecken, an der die Aussparung (131) der Klebefolie (130) ausgebildet ist;
dadurch, dass jede der ersten und der zweiten leitfähigen Folie (113, 123) ein elektrisches Anisotropieverhältnis besitzt, das von etwa 100 bis 200 reicht;
und dadurch, dass der Berührungsbildschirm ferner Schaltkreise zum Ermöglichen von Mehrfachberührungserkennung beinhaltet, wobei die Schaltkreise derart konfiguriert sind, dass erste Messpunkte der ersten leitfähigen Folie (113), die entlang einer der zweiten Richtung (X) entsprechenden X-Achse verteilt sind, durch die zweiten Elektroden (114) gescannt werden und x-Komponenten der berührten Punkte basierend auf der Reaktion der ersten Messpunkte bestimmt werden; zweite Messpunkte der zweiten leitfähigen Folie (123), die entlang einer der ersten Richtung (Y) entsprechenden Y-Achse verteilt sind, durch die vierten Elektroden (124) gescannt werden und y-Komponenten der berührten Punkte basierend auf der Reaktion der zweiten Messpunkte bestimmt werden; wobei eine erste Spannung durch die erste bzw. die zweite Elektrode (115, 114) an die erste leitfähige Folie (113) angelegt wird; und eine von der ersten Spannung verschiedene zweite Spannung durch die entsprechende vierte Elektrode (124) an mindestens einen der zweiten Messpunkte, mit der Lage auf der Y-Achse neben einer oder eine der y-Komponenten überlappend, angelegt wird, wobei Spannungen an den ersten Messepunkten, mit den Lagen auf der X-Achse neben den oder die x-Komponenten überlappend als Reaktion auf das Anlegen der zweiten Spannung durch die entsprechenden zweiten Elektroden (114) der Reihe nach gemessen werden, und die eine der y-Komponenten und eine der x-Komponenten, welche einem der ersten Messpunkte entspricht, an dem eine lokale extreme Spannung gemessen wird, als die Lage eines entsprechenden der berührten Punkte ausgegeben werden.

2. Berührungsbildschirm (100) gemäß Anspruch 1, wobei die erste leitfähige Folie (113) aus einem Nanomaterial gefertigt ist, das Reihen von Kohlenstoff-Nanoeinheiten besitzt, wobei sich jede Reihe im Wesentlichen in die erste Richtung (Y) erstreckt, die zweite leitfähige Folie (123) aus einem Nanomaterial gefertigt ist, das Reihen von Kohlenstoff-Nanoeinheiten besitzt, wobei sich jede Reihe im Wesentlichen in die zweite Richtung (X) erstreckt.

3. Berührungsbildschirm (100) gemäß Anspruch 1, wobei eine der ersten leitfähigen Bahnen (116) mit der ersten Elektrode (115) verbunden ist und die anderen ersten leitfähigen Bahnen (116) jeweils mit den zweiten Elektroden (114) verbunden sind, eine der zweiten leitfähigen Bahnen (125) mit der dritten Elektrode (126) verbunden ist und die anderen zweiten leitfähigen Bahnen (125) jeweils mit den vierten Elektroden (124) verbunden sind.

4. Berührungsbildschirm (100) gemäß Anspruch 3, wobei die eine der ersten leitfähigen Bahnen (116), die mit der ersten Elektrode (115) verbunden ist, ein im Wesentlichen Z-förmiges Profil ausbildet und die eine der zweiten leitfähigen Bahnen (125), die mit der dritten Elektrode (126) verbunden ist, ein im Wesentlichen L-förmiges Profil ausbildet.

5. Berührungsbildschirm (100) gemäß Anspruch 1, wobei ein Teil der ersten leitfähigen Bahnen (115), die mit den zweiten Elektroden (114) verbunden sind, ein im Wesentlichen L-förmiges Profil ausbilden, ein Teil der ersten leitfähigen Bahnen (115), die mit den zweiten Elektroden (114) verbunden sind, ein im Wesentlichen gerades linienförmiges Profil ausbilden und die zweiten leitfähigen Bahnen (125), die mit den vierten Elektroden (124) verbunden sind, ein im Wesentlichen Z-förmiges Profil ausbilden.

6. Berührungsbildschirm (100) gemäß Anspruch 1, der ferner eine Vielzahl von Abstandshaltern beinhaltet, die zwischen der ersten und der zweiten leitfähigen Folie (113, 123) angeordnet sind.

7. Berührungsbildschirm (100) gemäß Anspruch 1, wobei die erste leitfähige Folie (113) einen spezifischen Oberflächenwiderstand besitzt, der von etwa 1 Kiloohm pro Quadrat bis 800 Kiloohm pro Quadrat reicht, und die zweite leitfähige Folie (123) einen spezifischen Oberflächenwiderstand besitzt, der von etwa 1 Kiloohm pro Quadrat bis 800 Kiloohm pro Quadrat reicht.

## Revendications

1. Un écran tactile (100), comprenant :

un premier substrat (111);
un second substrat (121);
un premier film conducteur (113) disposé sur le premier substrat (111), où le premier film conducteur (113) présente de l'anisotropie électrique et a une résistivité plus basse dans une première direction (Y) que dans une seconde direction (X) transversale à la première direction (Y), et comprend en outre deux côtés opposés l'un à l'autre dans la première direction (Y) ;
un second film conducteur (123) disposé sur le second substrat (121) et juxtaposé au premier film conducteur (113) de manière à être face-à-face, où le second film conducteur (123) présente de l'anisotropie électrique et a une résistivité plus basse dans la seconde direction (X) que dans la première direction (Y), et comprend en outre deux côtés opposés l'un à l'autre dans la seconde direction (X), et où les premier et second films conducteurs sont isolés l'un de l'autre et sont couplés électriquement l'un à l'autre par l'intermédiaire du toucher ;
une pluralité de premières lignes conductrices (116) ;
une pluralité de secondes lignes conductrices (125) ; et
un film adhésif (130) s'étendant le long des côtés périphériques des premier et second films conducteurs (113, 123) et liant les premier et second films conducteurs (113, 123) ensemble ;
où l'écran tactile (100) comprend en outre une première électrode (115) disposée sur un des côtés du premier film conducteur (113), une pluralité de deuxièmes électrodes (114) uniformément disposées le long de l'autre des côtés du premier film conducteur (113), une troisième électrode (126) disposée sur un des côtés du second film conducteur (123), et une pluralité de quatrièmes électrodes (124) uniformément disposées le long de l'autre des côtés du second film conducteur (123), la première électrode (115) est couplée électriquement à un des côtés du premier film conducteur (113), les deuxièmes électrodes (114) sont couplées électriquement à l'autre des côtés du premier film conducteur (113), la troisième électrode (126) est couplée électriquement à l'un des côtés du second film conducteur (123), et les quatrièmes électrodes (124) sont couplées électriquement à l'autre des côtés du second film conducteur (123) ;

**caractérisé en ce que** : le film adhésif (130) définit un renfoncement (131) à l'un de ses côtés périphériques, les premières lignes conductrices (116) s'étendent à partir de la première électrode (115) et des secondes électrodes (114) en direction de l'un des côtés du premier film conducteur (113) là où le renfoncement (131) du film adhésif (130) est formé, et les secondes lignes conductrices (125) s'étendent à partir de la troisième électrode (126) et des quatrièmes électrodes (124) en direction de l'un des côtés du second film conducteur (123) là où le renfoncement (131) du film adhésif (130) est formé ;
**en ce que** chacun des premier et second films conducteurs (113, 123) a un coefficient d'anisotropie électrique allant d'environ 100 à 200 ;
et **en ce que** l'écran tactile comprend en outre une circuiterie permettant une détection multitouche, la circuiterie étant configurée de telle façon que des premiers points de mesure du premier film conducteur (113) distribués le long d'un axe X correspondant à la seconde direction (X) sont scannés par l'intermédiaire des deuxièmes électrodes (114), et des composantes x des points touchés sont déterminées sur la base de la réponse des premiers points de mesure ; des seconds points de mesure du second film conducteur (123) distribués le long d'un axe Y correspondant à la première direction (Y) sont scannés par l'intermédiaire des quatrièmes électrodes (124), et des composantes y des points touchés sont déterminées sur la base de la réponse des seconds points de mesure ; une première tension électrique est appliquée au premier film conducteur (113) par l'intermédiaire respectivement de la première et des deuxièmes électrodes (115, 114) ;
et une seconde tension électrique différente de la première tension électrique est appliquée à au moins un des seconds points de mesure dont l'emplacement sur l'axe Y est adjacent à ou chevauche l'une des composantes y par l'intermédiaire de la quatrième électrode correspondante (124), des tensions électriques aux premiers points de mesure dont les emplacements sont sur l'axe X adjacents à ou chevauchant l'une des composantes x sont mesurées de façon séquentielle par l'intermédiaire des deuxièmes électrodes correspondantes (114), en réponse à l'application de la seconde tension électrique, et celle des composantes y et l'une de des composantes x, qui correspondent à l'un des premiers points de mesure auquel une tension électrique locale extrême est mesurée, sont restituées comme étant l'emplacement de l'un des points touchés correspondants.

**2.** L'écran tactile (100) de la revendication 1, où le premier film conducteur (113) est fait à partir d'un nanomatériau qui a des chaînes de nano-unités de carbone, chaque chaîne s'étendant substantiellement dans la première direction (Y), le second film conducteur (123) étant fait à partir d'un nanomatériau qui a des chaînes de nano-unités de carbone, chaque chaîne s'étendant substantiellement dans la seconde direction (X).

**3.** L'écran tactile (100) de la revendication 1, où l'une des premières lignes conductrices (116) est connectée à la première électrode (115), et les autres premières lignes conductrices (116) sont connectées aux deuxièmes électrodes (114), respectivement, l'une des secondes lignes conductrices (125) est connectée avec la troisième électrode (126), et les autres secondes lignes conductrices (125) sont connectées avec la quatrième électrode (124), respectivement.

**4.** L'écran tactile (100) de la revendication 3, où l'une des premières lignes conductrices (116) connectée à la première électrode (115) forme un profil substantiellement en forme de Z, et celle des secondes lignes conductrices (125) connectée à la troisième électrode (126) forme un profil substantiellement en forme de L.

**5.** L'écran tactile (100) de la revendication 1, où une partie des premières lignes conductrices (115) connectées aux deuxièmes électrodes (114) forment un profil substantiellement en forme de L, une partie des premières lignes conductrices (115) connectées aux deuxièmes électrodes (114) forment un profil substantiellement en forme de ligne droite, et les secondes lignes conductrices (125) connectées aux quatrièmes électrodes (124) forment un profil substantiellement en forme de Z.

**6.** L'écran tactile (100) de la revendication 1, comprenant en outre une pluralité d'espaceurs disposés entre les premier et second films conducteurs (113, 123).

**7.** L'écran tactile (100) de la revendication 1, où le premier film conducteur (113) a une résistivité de surface allant d'environ 1 kilo-ohm par carré à 800 kilo-ohms par carré et le second film conducteur (123) a une résistivité de surface allant d'environ 1 kilo-ohm par carré à 800 kilo-ohms par carré.

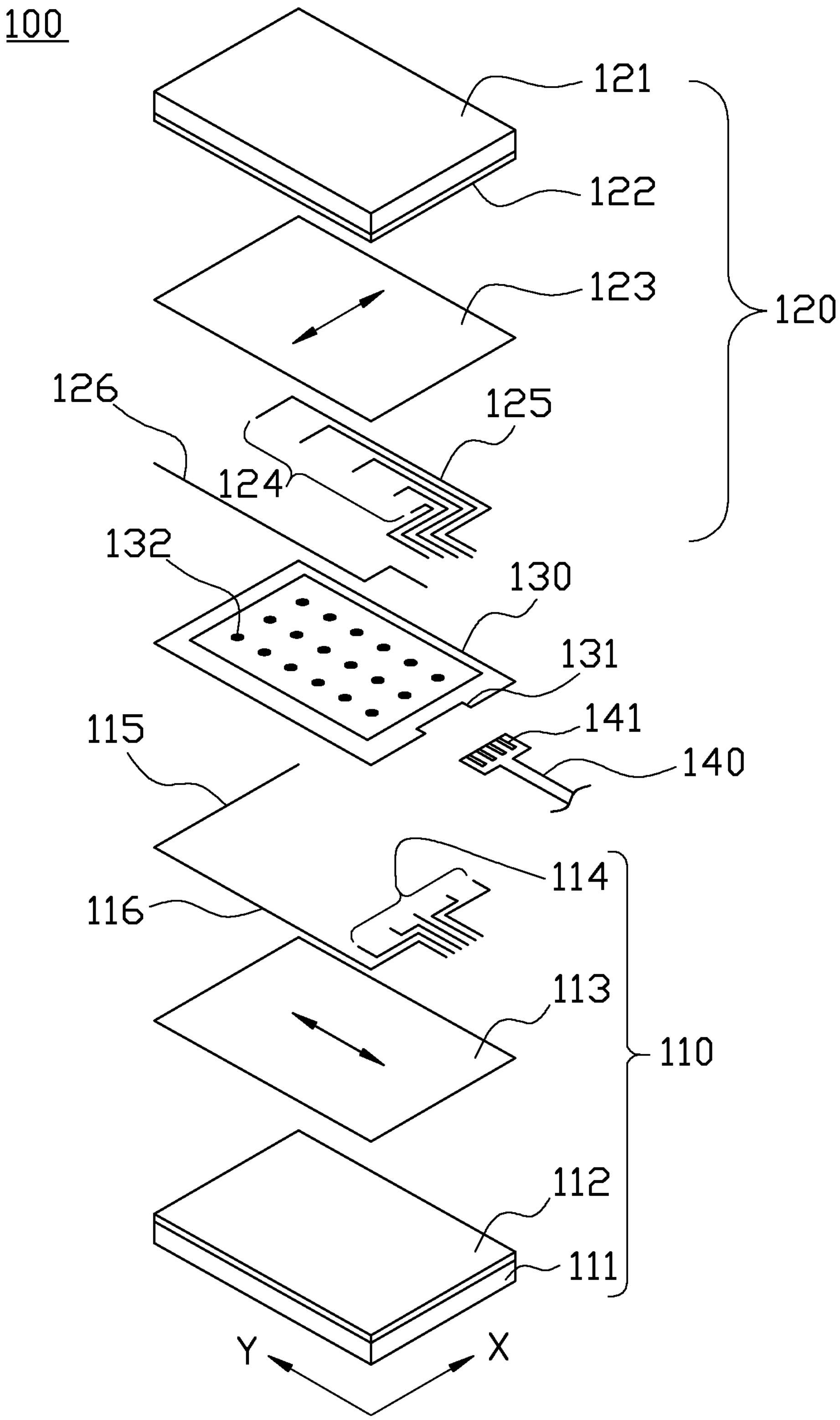
100
121
122
123
120
126
125
124
132
130
131
141
140
115
114
116
113
110
112
111
Y
X

FIG.1

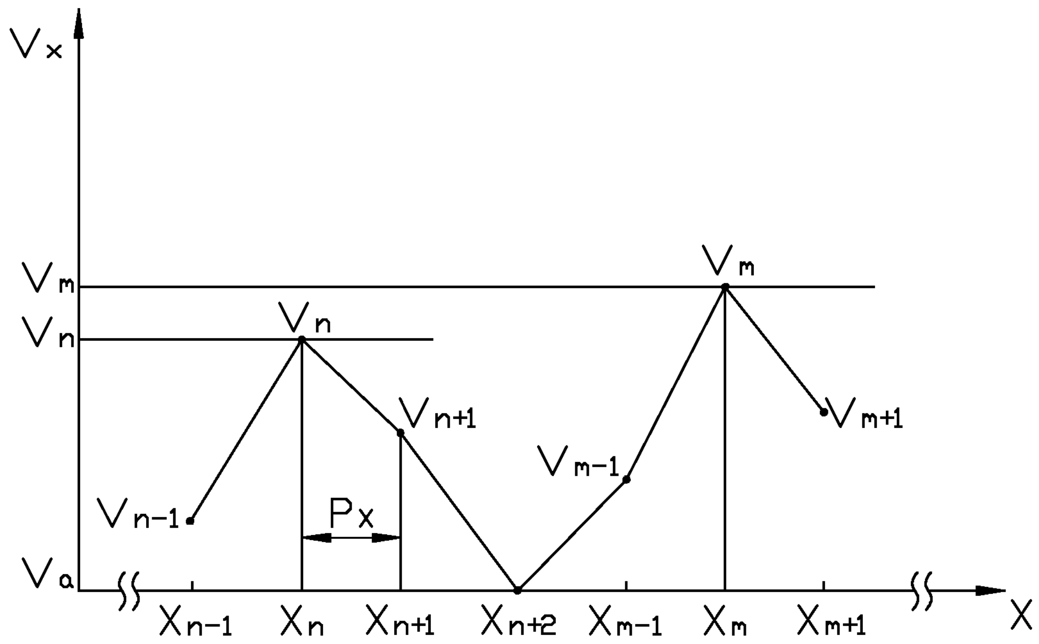


FIG.2

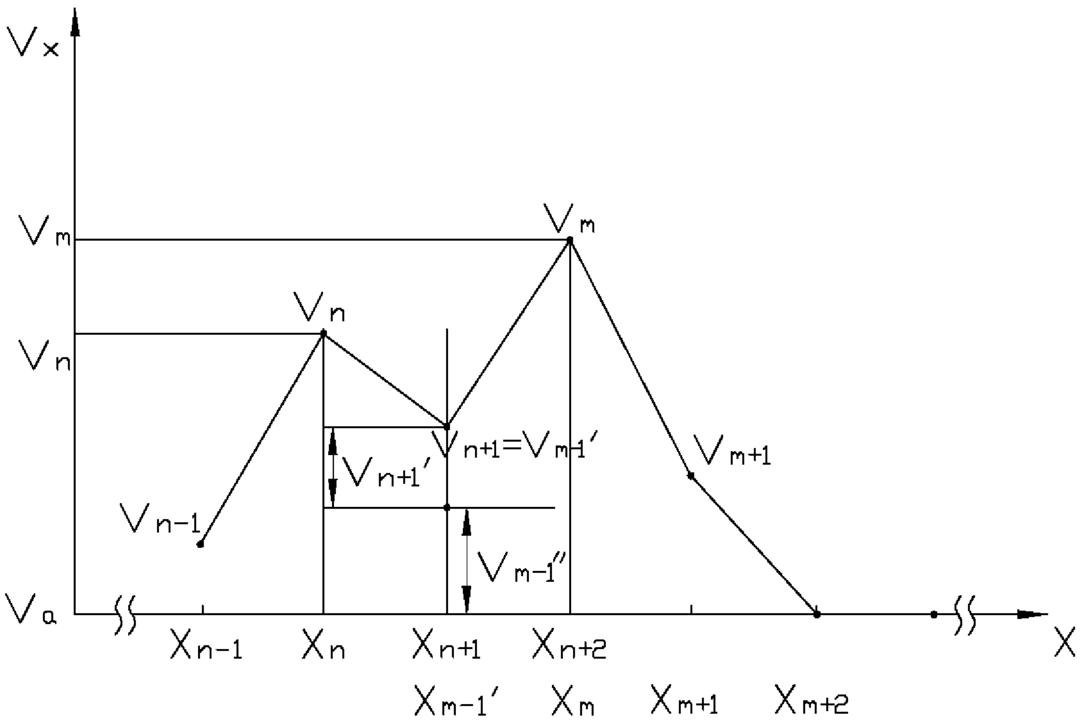
Vx
Vm
Vn
Va
Vm
Vn
Vn-1
Vn+1=Vm-1'
Vn+1'
Vm-1''
Vm+1
Xn-1
Xn
Xn+1
Xn+2
X
Xm-1'
Xm
Xm+1
Xm+2

FIG.3

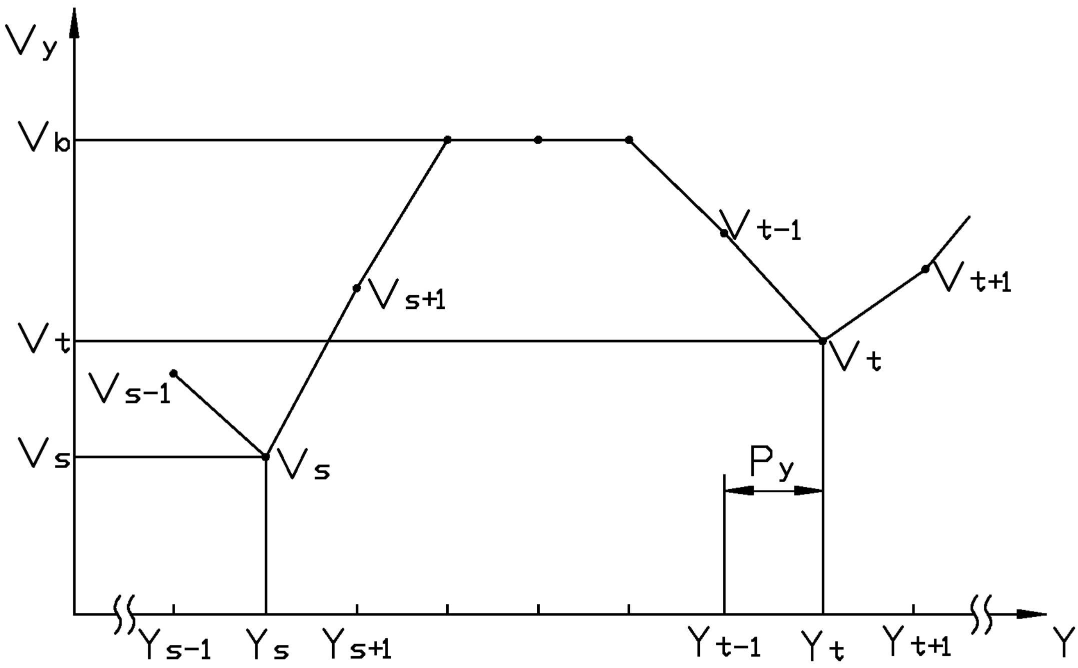


FIG.4

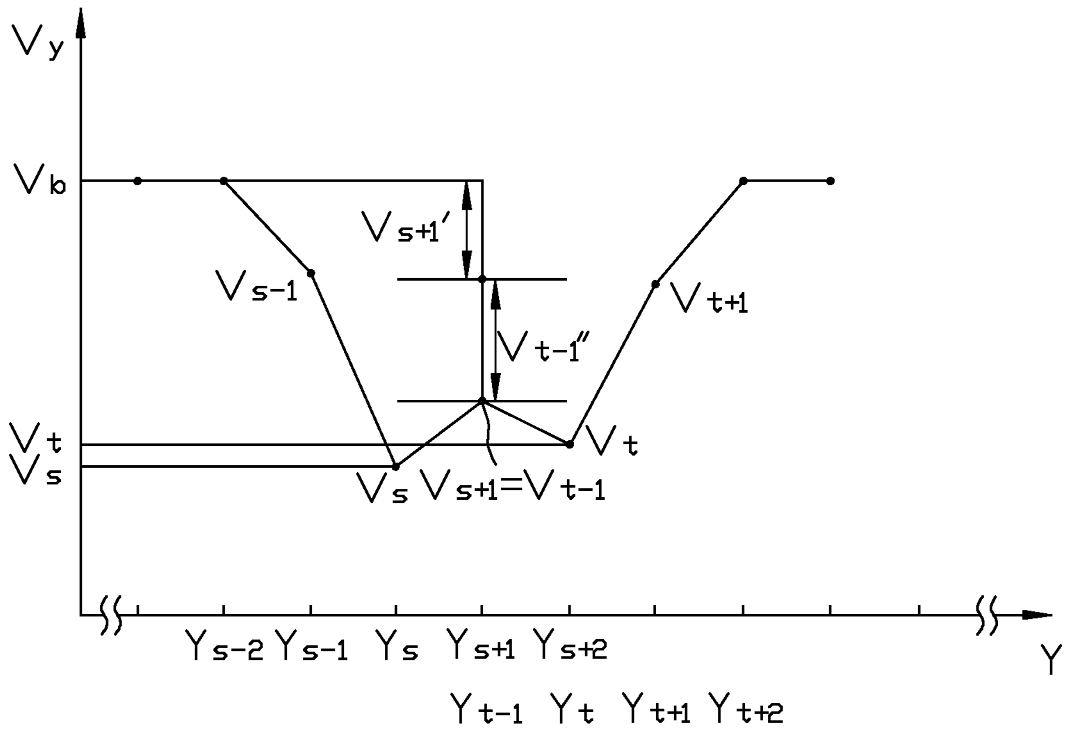
Vy
Vb
Vs+1'
Vs-1
Vt+1
Vt-1"
Vt
Vs
Vt
Vs Vs+1=Vt-1
Ys-2 Ys-1 Ys Ys+1 Ys+2
Y
Yt-1 Yt Yt+1 Yt+2

FIG.5

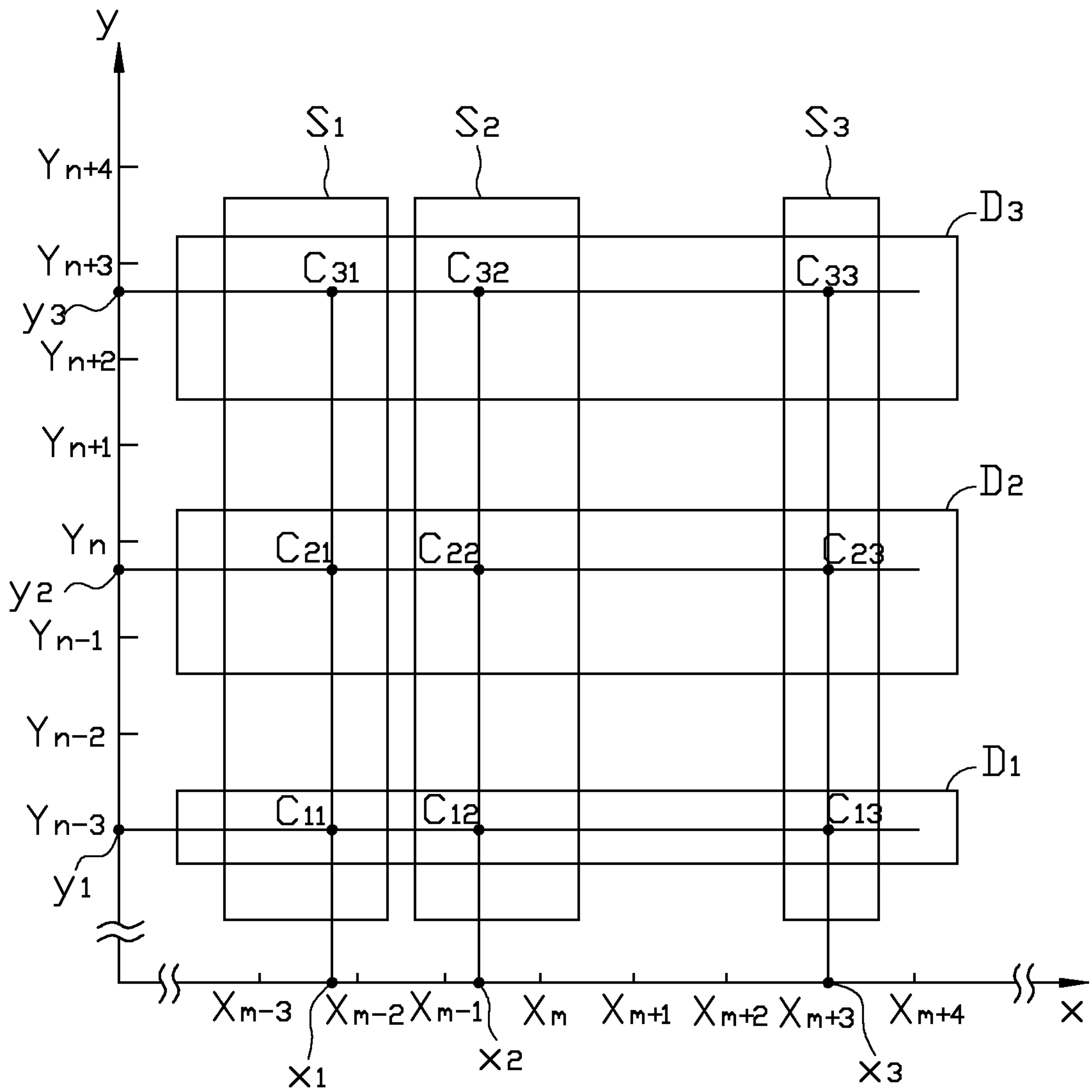
y
S1
S2
S3
D3
D2
D1
Yn+4
Yn+3
Yn+2
Yn+1
Yn
Yn-1
Yn-2
Yn-3
y3
y2
y1
C31
C32
C33
C21
C22
C23
C11
C12
C13
Xm-3
Xm-2
Xm-1
Xm
Xm+1
Xm+2
Xm+3
Xm+4
x
x1
x2
x3

FIG.6

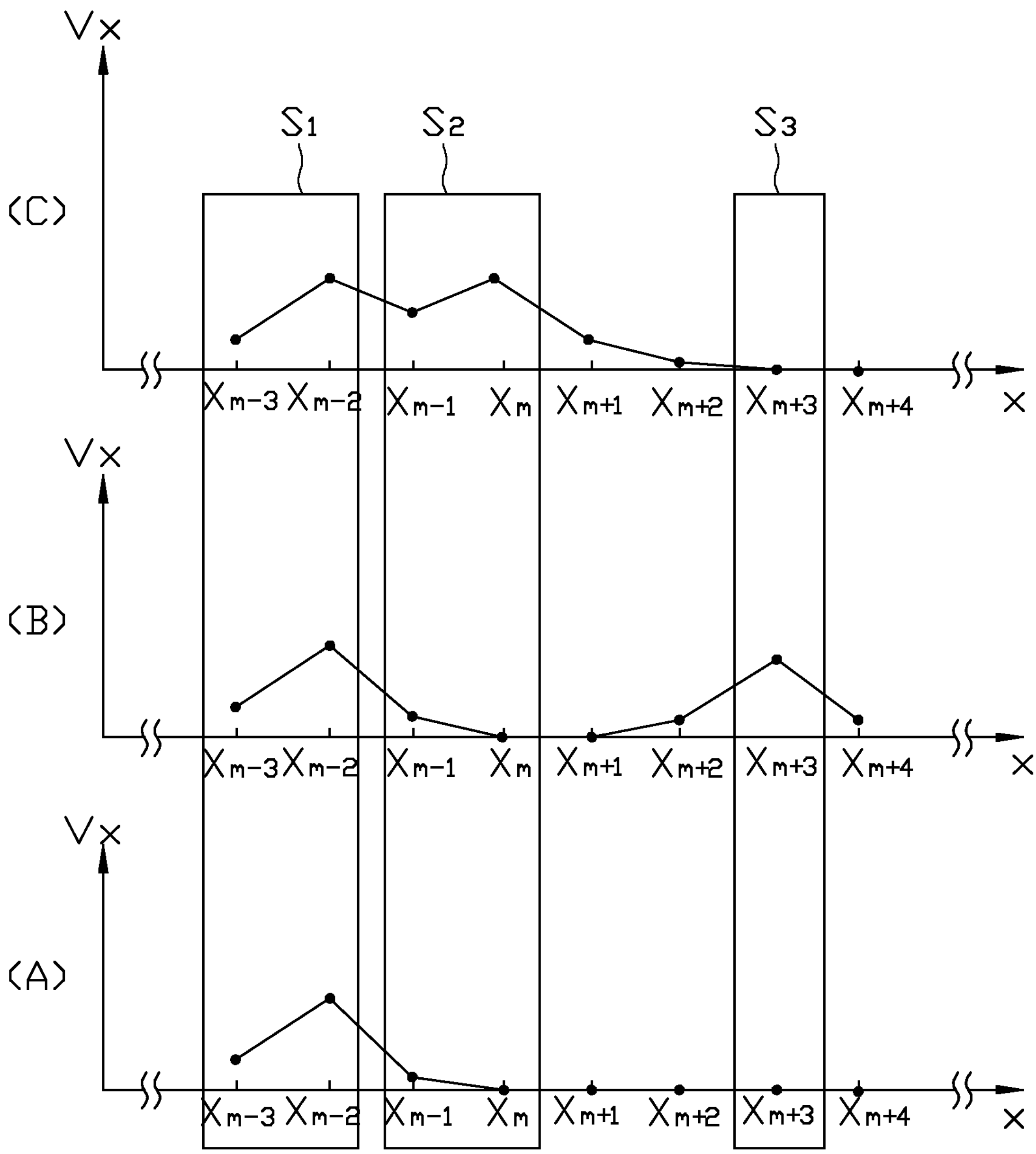
Vx
S1
S2
S3
(C)
Xm-3 Xm-2 Xm-1 Xm Xm+1 Xm+2 Xm+3 Xm+4
x
Vx
(B)
Xm-3 Xm-2 Xm-1 Xm Xm+1 Xm+2 Xm+3 Xm+4
x
Vx
(A)
Xm-3 Xm-2 Xm-1 Xm Xm+1 Xm+2 Xm+3 Xm+4
x

FIG.7

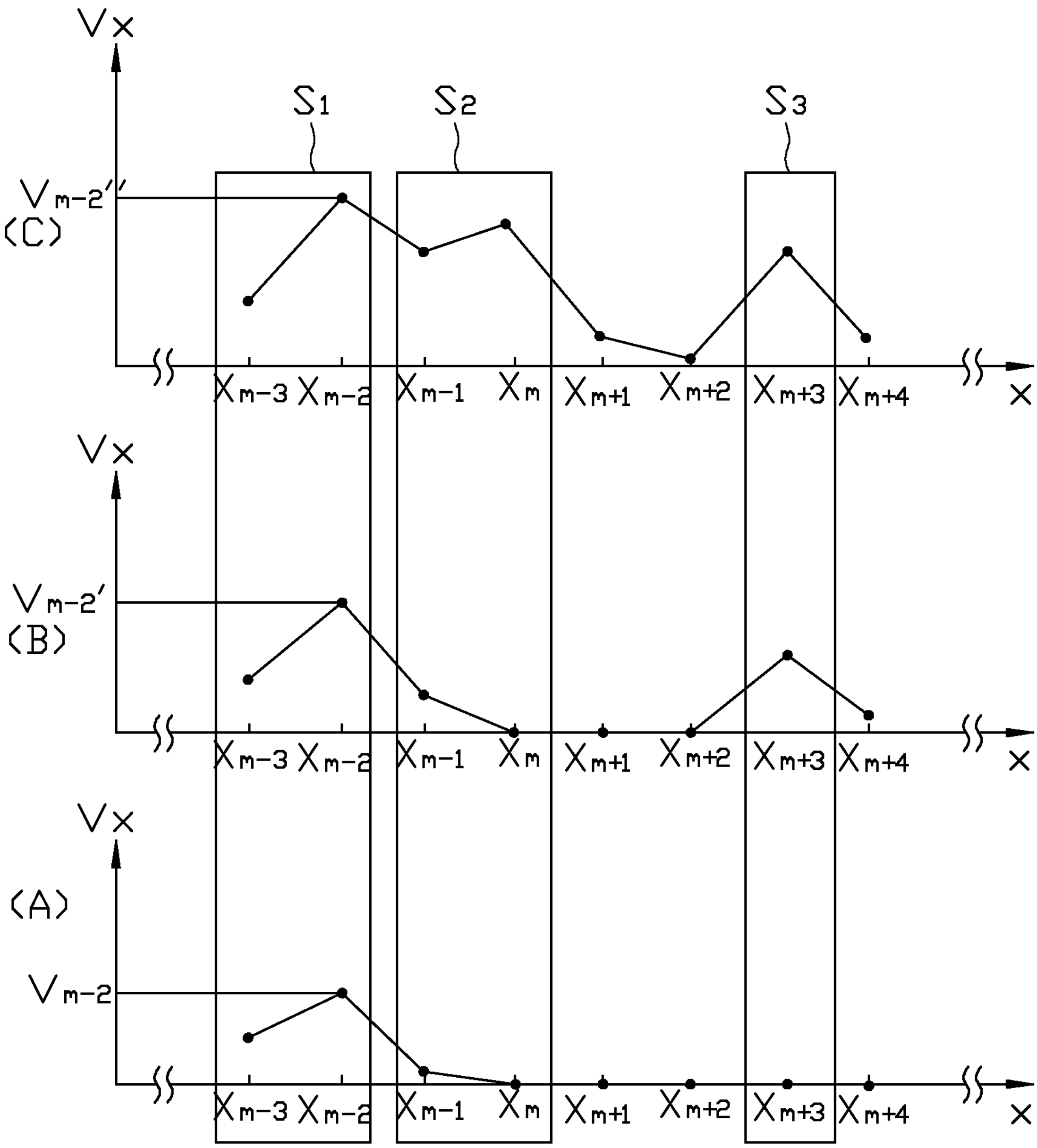
Vx
S1
S2
S3
Vm-2''
(C)
Xm-3 Xm-2 Xm-1 Xm Xm+1 Xm+2 Xm+3 Xm+4
x
Vx
Vm-2'
(B)
Xm-3 Xm-2 Xm-1 Xm Xm+1 Xm+2 Xm+3 Xm+4
x
Vx
(A)
Vm-2
Xm-3 Xm-2 Xm-1 Xm Xm+1 Xm+2 Xm+3 Xm+4
x

FIG.8

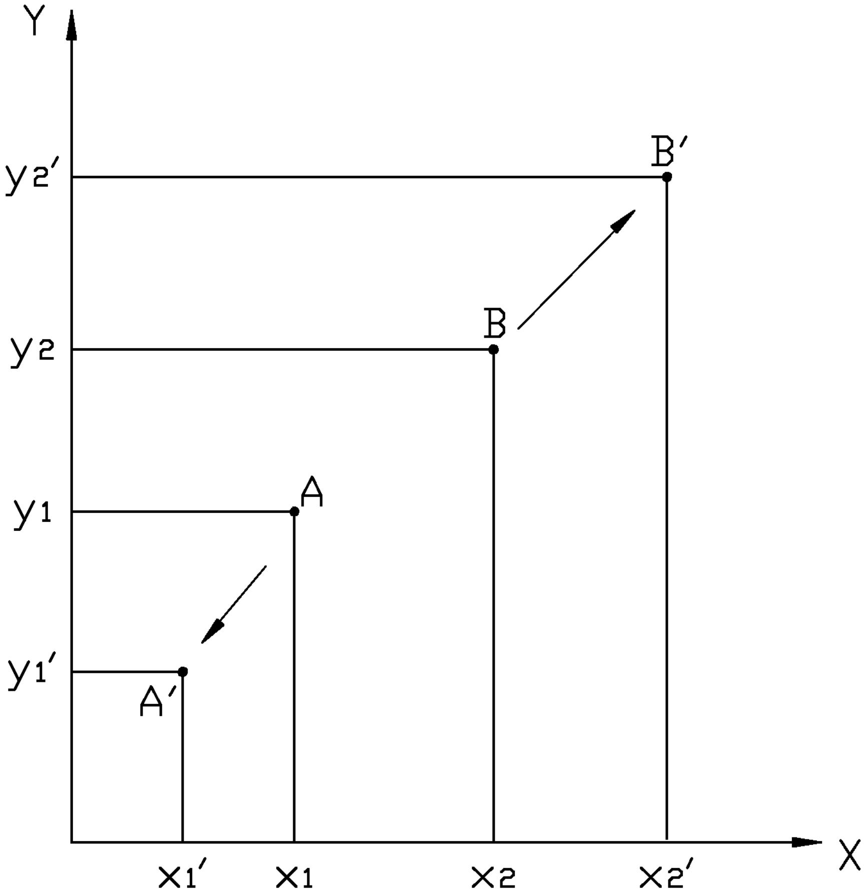


FIG.9

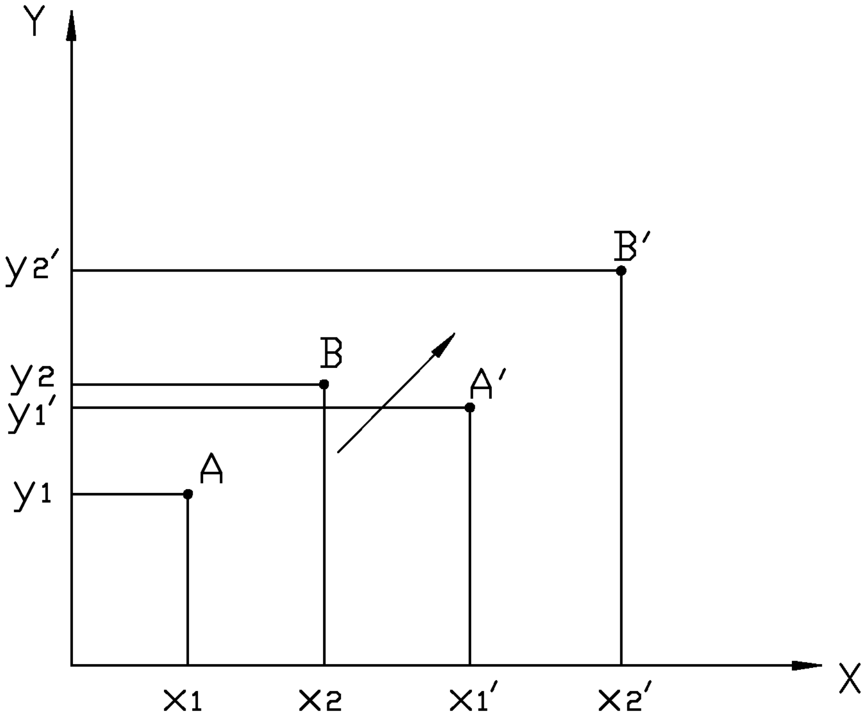


FIG.10

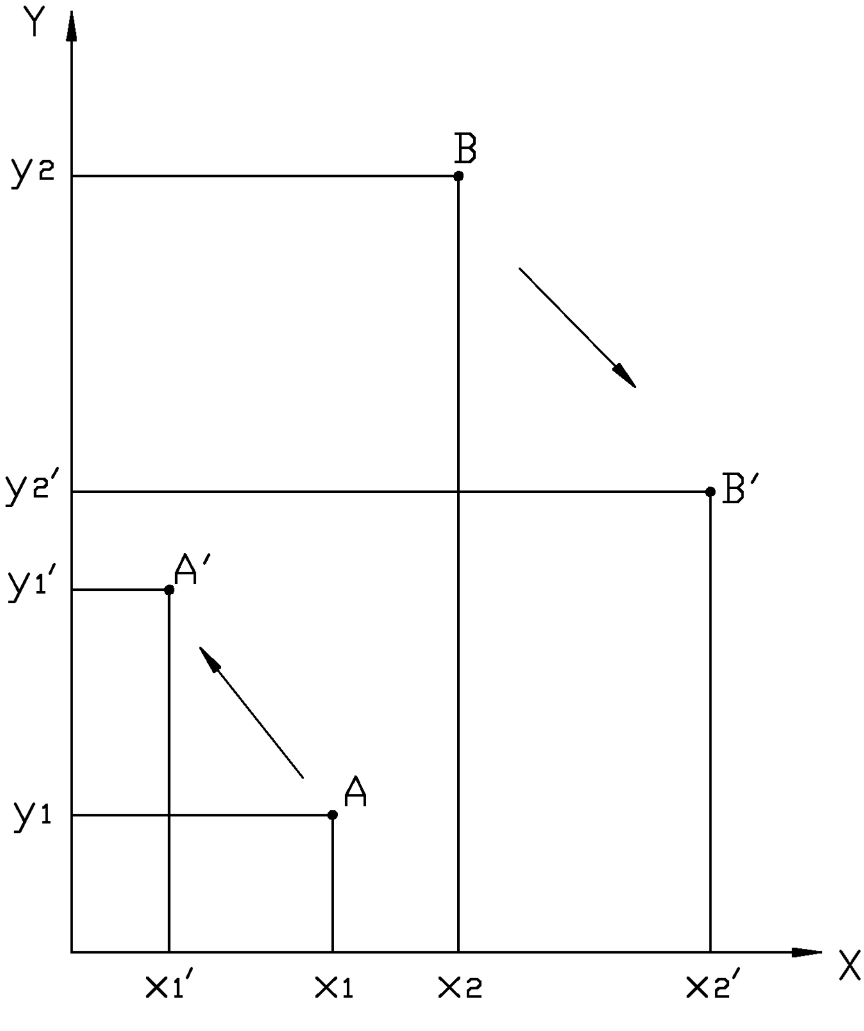


FIG.11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20060097991 A
- US 20080158181 A
- EP 2073109 A2
- US 20050041018 A1
- US 5818430 A
- US 20030098858 A1
- US 20080296073 A1
- US 5825352 A
- US 20090174675 A1
- US 20020034836 A1
- EP 1657626 A1
- TW 200920689